# EUROPEAN PATENT SPECIFICATION

(11) **EP 2 479 511 B1**
(45) Date of publication and mention of the grant of the patent: **24.05.2017**
(21) Application number: 11010218.3
(22) Date of filing: 27.12.2011
(51) Int. Cl.: F24J 2/46, F24J 2/54, F16L 3/18, F24J 2/14, F16L 27/107

(54) **Device for connecting the receiving tube of an adjustable solar collector to stationary pipes**
Vorrichtung zum Anschließen einer Empfangsleitung eines einstellbaren Solarkollektors an stationäre Leitungen
Dispositif de connexion du tube de réception d'un collecteur solaire réglable à des tuyaux stationnaires

(30) Priority: 24.01.2011 IT TO20110045
(43) Date of publication of application: 25.07.2012
(73) Proprietor: Astroflex S.p.A., 10097 Collegno (TO) (IT)
(72) Inventor: Castelli, Sergio, 10146 Torino (IT)
(74) Representative: Modiano, Micaela Nadia

(56) References cited:
- DE-A1-102007 048 745
- JP-A- 2003 011 029

## Description

The present invention relates to the field of the thermodynamic solar plants and, more particularly, to a device for connecting the receiving tube of an adjustable solar collector to stationary pipes.

As known, the thermodynamic solar plants make use of a solar collector, or a plurality of solar collectors connected in series. A solar collector as described in DE 10 2007048745 A1 generally comprises a reflecting surface or reflector, which typically has an elongated shape with a parabolic transverse profile - this geometric shape being also known as "linear paraboloid" - which converges the solar beams to a receiving tube extending along the focus line of the paraboloid. A heat-transfer fluid is fed to the receiving tube, which, in the most recent applications, consists of a mixture of pressurized (about 15 - 20 bars) molten salts, typically sodium nitrate and potassium nitrate. In an example of six collectors connected in series, each of which is 100 meters long, the mixture of molten salts may enter the series of solar collectors at a temperature of about 300 °C and be delivered to the pipelines at a temperature of about 600 °C.The document DE 10 2007 098745 A1 describes a device for connecting the receiving tube of a solar collector according to the preamble of claim 1. Since the collectors must be rotatable about an axis parallel to the focus line to follow the path of the sun during the course of the day, in order to maximize the efficiency of the plant, flexible connections are required between the inlet/outlet ends of the receiving tube and the stationary pipes, which pipes, e.g., are provided to connect the receiving tube to other collectors of the series or to other stations of the plant.

To this purpose, a corrugated, flexible metal hose is typically used, which has one end connected to the stationary pipe in the vertical direction and the opposite end connected to a corresponding end of the receiving tube in the radial direction, e.g., by a union elbow.

However, a known drawback of the above-cited corrugated metal hoses is that they have a low fatigue strength in relation to the torsional stress. As the person skilled in the art will easily understand, in order to prevent the hose from being subject to torsional stress, while the reflector rotates the end of the hose connected to the receiving tube must follow a path lying on the same plane perpendicular to the axis of rotation on which the opposite end of the hose, which is connected to the stationary pipeline, lies.

However, with the known systems this requirement is not fulfilled because the receiving tubes, which are locked at a middle area, are free to axially expand at their opposite ends (where they are connected to the hoses) because they are subject to considerable thermal deformations due to the high temperatures of the heat-transfer fluid. In the above-cited example of a receiving tube 100 meters long which is subject to a thermal rush of 600 °C, lenghtening is about one meter. Therefore, the connection point between the receiving tube and the hose will be generally misaligned, in the longitudinal direction parallel to the axis of rotation, with respect to the opposite connection point between the hose and the stationary pipes, of a variable amount depending on the temperature of the heat-transfer fluid. In other terms, while the reflector rotates, the end of the hose connected to the receiving tube may describe a path which generally does not lie on the same plane perpendicular to the axis of rotation on which the opposite end lies.

As mentioned above, this circumstance is undesirable because the hose is subjected to a deleterious torsional stress which affects its fatigue life, with premature formation of cracks and consequent leakages of heat-transfer fluid and need for replacement of the damaged parts.

This drawback of the conventional connection systems is further worsened by the critical conditions, in terms of pressure and temperature, in which the heat-transfer fluid is used, which conditions contribute to prematurely wear out the material of the hose.

Therefore, it is a main object of the present invention to provide a device for connecting the receiving tube of an adjustable solar collector to stationary pipes, which is improved in terms of sturdiness and reliability with respect to the conventional systems.

The above objects and other advantages, which will better appear from the following description, are achieved by a device having the features recited in claim 1, while the dependent claims state other advantageous, though secondary features of the invention.

The invention will be now described in more detail with reference to a few preferred, non-exclusive embodiments, shown by way of non-limiting example in the attached drawings, wherein:
- Fig. 1 is a view in side elevation of a general solar collector in the shape of a linear paraboloid, on which a device according to the invention is installed;
- Fig. 2 is a front view of a longitudinal end portion of the solar collector of Fig. 1;
- Fig. 3 is a view in cross-section to an enlarged scale of a detail of Fig. 1, made along line III-III;
- Fig. 4 is a view in cross-section of the detail of Fig. 3, made along ine IV-IV;
- Fig. 5 is a view similar to Fig. 4 showing a first, alternative embodiment of the device according to the invention;
- Figs. 6, 7a, 7b, 8 diagrammatically show the solar collector of Fig. 1 in respective four consecutive operative configurations;
- Figs. 9 and 10 are two front views representing a second, alternative embodiment of the device according to the invention in two different operative configurations, wherein only a few parts of the solar collector are shown for better clarity;
- Fig. 11 is a view in side elevation of an isolate component of the device of Figs. 9 and 10;
- Fig. 12 shows a detail of Fig. 9 to an enlarged scale.

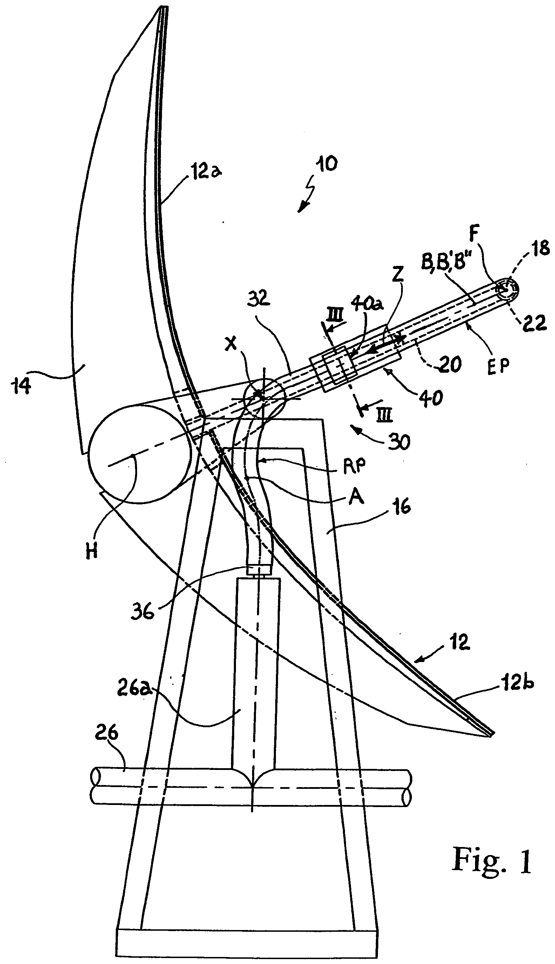

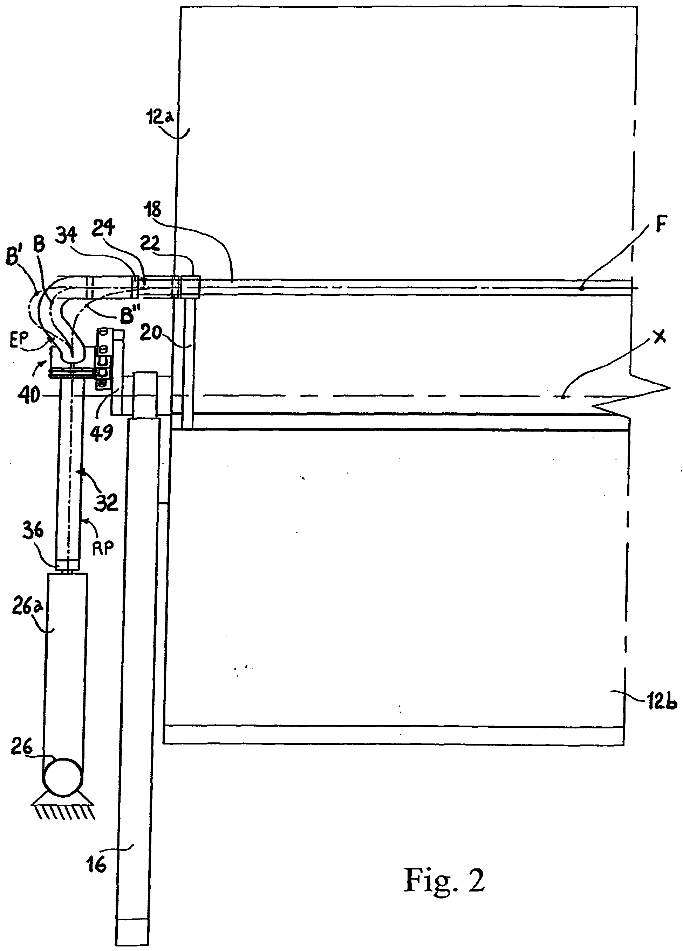

With initial reference to Figs. 1 and 2, a general solar collector 10 comprises a reflecting surface or reflector 12 having an elongated shape with a parabolic transverse profile. Reflector 12 consists of two reflector portions 12a, 12b arranged in a mirror-like fashion with respect to the longitudinal plane of simmetry H of the paraboloid. The reflector is mounted on a frame 14 which is rotatably supported at its opposite, longitudinal ends by a pair of supports such as 16, to which frame 14 is hinged about a horizontal axis X parallel to the focus line F of reflector 12.

Reflector 12 converges the solar beams toward a receiving tube 18 whose axis extends along focus line F of the paraboloid. Receiving tube 18 is supported by arms such as 20 projecting from frame 14 (Fig. 2). Arms 20 are provided with bushes 22 at their free ends, in which receiving tube 18, which is assumed to be axially locked at an intermediate area in a conventional manner (not shown), is slidably inserted, in order to allow the receiving tube to lengthen/shorten by effect of its thermal deformation.

One end 24 (Fig. 2) of receiving tube 18 is connected to a vertical mouth 26a of a stationary pipe 26 via a connection device 30 according to the invention.

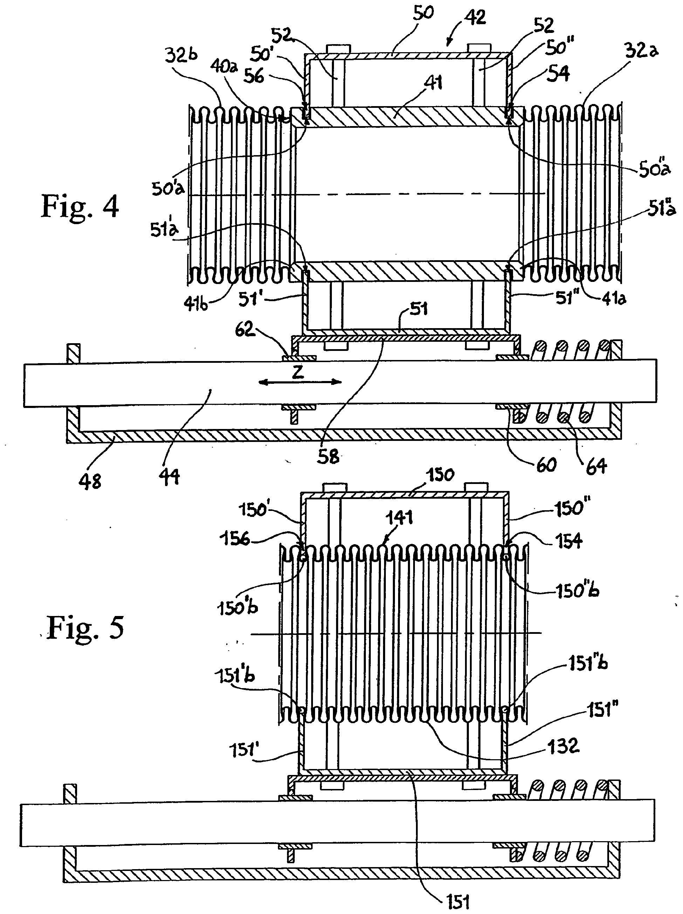

Device 30 comprises a flexible hose 32 having one end, 34, axially connected to end 24 of receiving tube 18 and an opposite end, 36, axially connected to vertical mouth 26a of stationary pipe 26. Device 30 also comprises guide means 40 which restrainedly engage an intermediate portion of hose 32 and bind it to reflector 12 in the longitudinal direction, while let it free to shift along its axis on a plane perpendicular to the axis of receiving tube 18, in a rectilinear, shifting direction Z (Figs. 1, 4) intersecting the axis of the receiving tube. It should be noted that, throughout the present description including the claims, the adjective "longitudinal" is generally referred to the direction parallel to the axis of rotation X of reflector 12, and the "axis" of the intermediate portion (which intermediate portion could be non-rectilinear, as shown in the third embodiment described below) is always intended as the axis of the intermediate portion at its end connected to the stationary pipes.

With the above configuration, when reflector 12 is rotated the hose portion defined between end 36 connected to stationary pipe 26 and guide means 40, hereinafter "rotation portion" RP (Figs. 1, 2), will bend bidimensionally into configurations lying on a plane perpendicular to axis of rotation X, without being affected by the thermal deformation of receiving tube 18. Of course, for this condition being fulfilled the installer should take care to install mouth 26a of stationary pipe 26 with its axis lying on the same plane perpendicular to axis of rotation X on which the axis of the restrained portion of hose 32 lies, as shown in Fig. 2.

Similarly, when receiving tube 18 is subject to thermal deformations, the hose portion defined between end 34 connected to receiving tube 18 and guide means 40, hereinafter "expansion portion" EP, will bend bidimensionally into configurations lying on the plane of simmetry of the paraboloid, such as those referred to as B, B', B" in Fig. 2, without being affected by the rotation of the reflector.

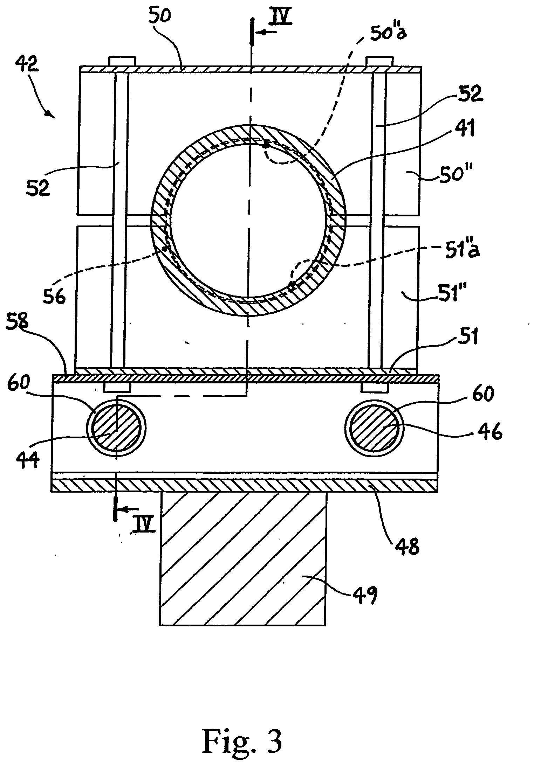

According to a first embodiment of the invention, shown in detail in Figs. 3, 4, the intermediate portion of the hose consists of a rigid sleeve 41 having two pieces of corrugated metal hose 32a, 32b welded to its opposite ends 41 a, 41b to form the flexible hose and arranged with its axis aligned to the rectilinear, shifting direction Z.

Guide means 40 comprise a slide 42 which is slidable along a pair of guide bars 44, 46 extending parallel to the axis of simmetry of the parabolic profile. Guide bars 44, 46 are supported by a base 48 which is fixed to an arm 49 integral with frame 49. Alternatively, base 48 could be fixed to the same arm 20 which supports receiving tube 18.

Slide 42 comprises two counterposed plates 50, 51 interconnected via tie-rods 52, between which sleeve 41 is sandwiched. In more detail, each plate 50, 51 has two opposed walls 50', 50" and 51', 51", which are bent at right angles and have respective arched recesses 50'a, 50"a and 51'a, 51"a which engage corresponding grooves 54, 56 formed near the opposite end of sleeve 41. One of the plates, 51, is fixed to a support 58 bearing two pairs of bushes 60, 62 which slidably engage guide bars 44, 46. Slide 42 is elastically biased away from reflector 12 by a pair of compression springs 64 respectively fitted on guide bars 44, 46 between support 58 and base 48, on the side of the reflector.

In the operation, as mentioned above, the portions of hose 32 upstream and downstream of guide means 40 always bend bidimensionally on respective planes. As a result, the hose will always be stressed only by bending in each of its deformed configurations deriving from the rotation of the reflector and from the thermal deformation of the receiving tube, any torsional stress being substantially neutralized.

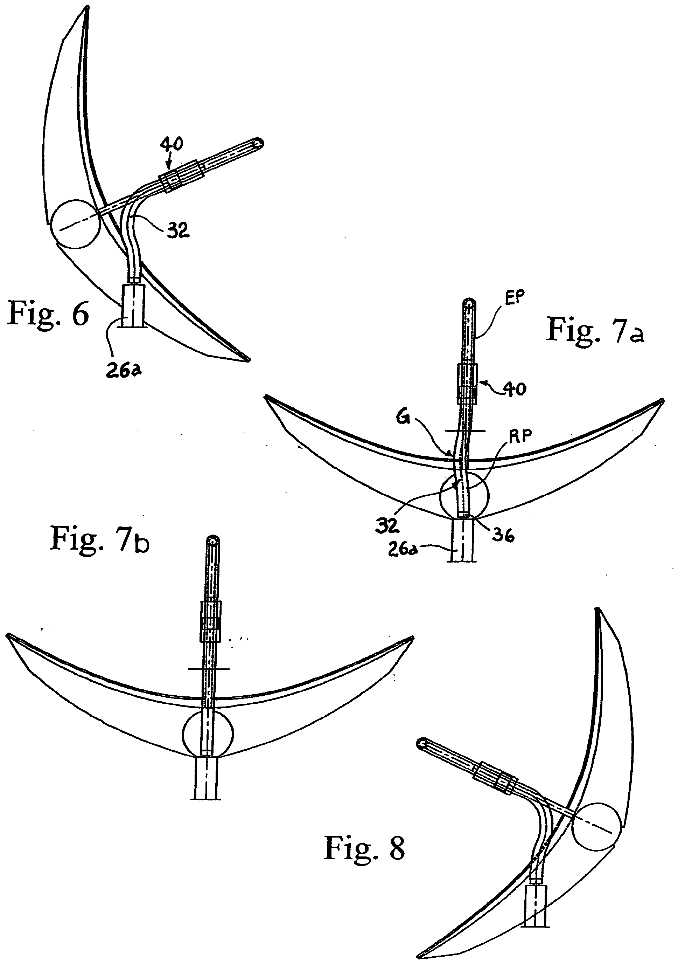

The slidable connection between the hose and the reflector takes account of the plastic, bending behaviour of the corrugated metal hoses, which is well known to the person skilled in the art. In fact, as shown in Figs. 6 to 8, when the reflector is rotated, e.g., from the general oblique configuration of Fig. 6 (which corresponds to the configuration of Fig. 1) to the vertical configuration of Fig. 7a, the rotation portion RP of hose 32 is liable to maintain its previous, deformed configuration, so that an undesired "hump" G rises (Fig. 7a). This effect becomes even more evident when the hose is pressurized because, in such conditions, the hose lenghtens and the hump G becomes more accentuated. In addition, the termal lenghtening of the hose, due to its high operative temperature, further increases this effect.

The above undesirable effect, which could affect the correct bending of the hose when the reflector is rotated to the opposite side (Fig. 8), is counteracted by allowing the restrained portion of the hose to slide axially. In addition, slide 42 is also biased away from the reflector by springs 64, which, therefore, contribute to straighten the rotation portion RP of the hose and to maintain the latter tensioned when the reflector is rotated to its vertical configuration facing upwards, as shown in Fig. 7b.

In a first alternative embodiment of the invention, as shown in Fig. 5, the hose consists of an integral piece of corrugated metal hose 132, and the opposed walls 150', 150" and 151', 151" of plates 150, 151 engage respective grooves 154, 156 of the corrugated profile, between which the intermediate portion 141 is defined. Preferably, the arched recesses formed on walls 150', 150" and 151', 151" are lined with respective, correspondingly arched rods 150'b, 150"b e 151'b, 151"b, in order to protect hose 132 from wearing in the contact areas with plates 150, 151. Also in this case, the intermediate, restrained portion of hose 132 is arranged with its axis aligned to the shifting direction Z.

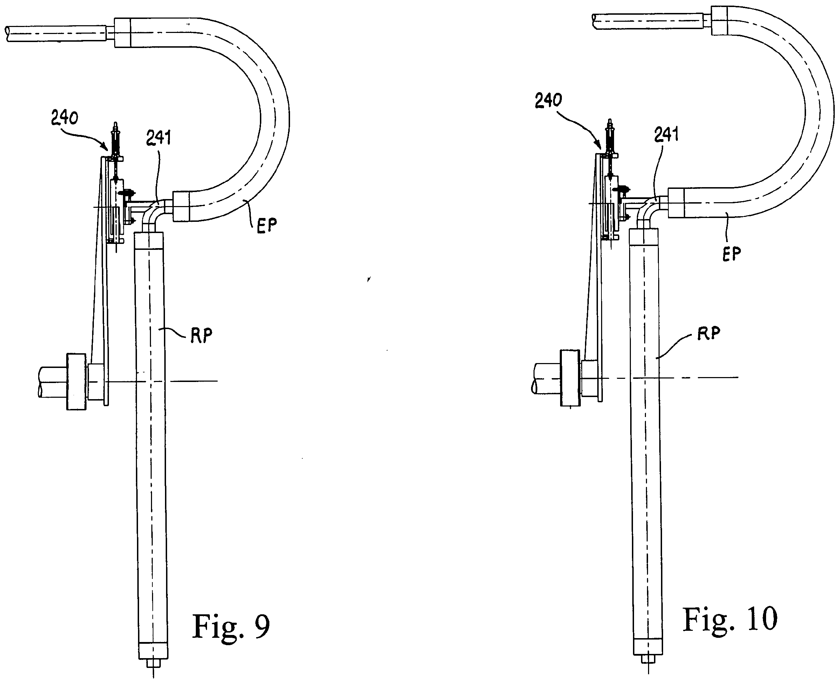

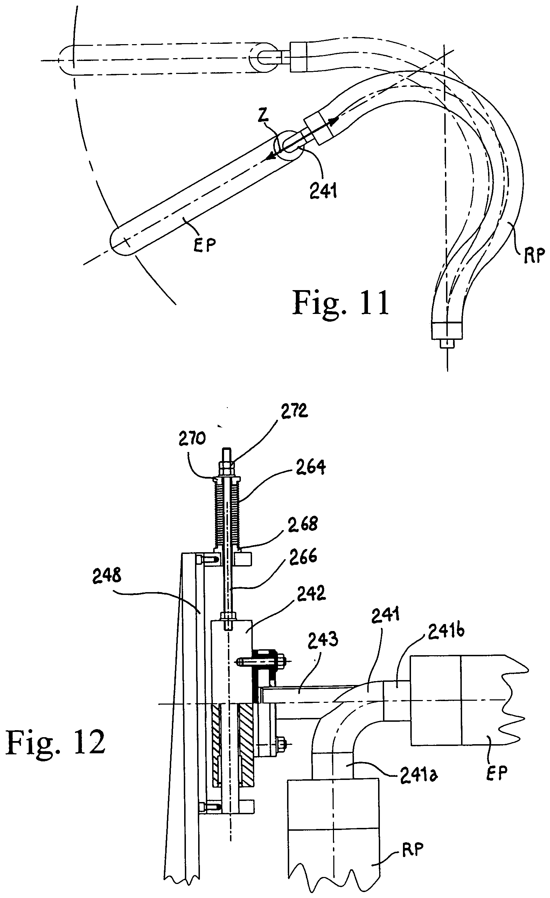

Figs. 9-12 show a second, alternative embodiment of the invention which differs from the first embodiment in that the intermediate, restrained portion of the hose consists of a rigid elbow 241 connected to slide 242 via a bracket 243. Elbow 241 is arranged in such a manner that its axis, at its end 241a connected to rotation portion RP of hose 232, is aligned to the rectilinear, shifting direction Z, while its end 241 b connected to expansion portion EP of hose 232 projects outwards in a direction parallel to axis of rotation X (Fig. 12). Accordingly, the expansion portion EP of hose 232 will always assume U-bent configurations lying on the longitudinal plane of simmetry of the paraboloid, as shown in Figs. 9, 10.

It should be undestood that, also in this case, the installer should take care to install the mouth of the stationary pipe in such a manner that its axis lies on the same plane perpendicular to axis of rotation X on which the axis of the restrained portion, at its end 241a connected to the stationary pipe, lies.

Furthermore, in order to elastically bias the slide away from the reflector, in this second, alternative embodiment, a threaded rod 266 parallel to the guide bars is connected to slide 242 and projects outside base 248 via a flanged sleeve 268 fixed to base 248. A spring 264 is fitted to threaded rod and is engaged, outside base 248, between flanged sleeve 268 and a cap ring 270, which is fitted to threaded rod 266 and abuts against nuts 272 screwed to threaded rod 266.

A few preferred embodiments have been described herein, but of course many changes may be made by a person skilled in the art within the scope of the claims. In particular, the springs may be replaced by other tensioning means adapted to maintain the rotation portion RP of the hose tensioned while the reflector is rotated, e.g., hydraulic/pneumatic actuators, counter-weights, elastic elements made of rubber, and the like. Additionally, it should be understood that the hose may be formed of a plurality of insulating layers or stiffening layers, e.g., layers of glass fiber and layers of interlaced metal wire, in a conventional manner in the field. Furthermore, as the person skilled in the art will easily appreciate, the above-described embodiments would effectively achieve the scope of neutralizing the torsional stress on the hose even if the axis of rotation of the reflector did not lie on the plane of simmetry H of the paraboloid (so that the shifting direction Z along which the slide is free to shift does not coincide with the radial direction extending between the axis of rotation X of the reflector and the axis of the receiving tube), provided that said rectilinear, shifting direction, as mentioned above, intersects the axis of the receiving tube 18 and lies on a plane perpendicular to receiving tube 18. Furthermore, with reference to the third embodiment, elbow 241 could also be bent at angles smaller that 90°, provided that its end 240b projecting outwards has its axis lying on the plane defined by the axis F of the receiving tube and the rectilinear, shifting direction Z.

## Claims

1. A device for connecting the receiving tube (18) of a solar collector (10) having a reflector (12) adjustable about an axis of rotation (X) parallel to the axis (F) of said receiving tube (18), to a stationary pipe (26, 26a), comprising a flexible hose (32) having one end (34) connectable to one end (24) of the receiving tube (18) and an opposite end (36) connectable to said stationary pipe (26, 26a), **characterized in that** it comprises guide means (40) adapted to guide an intermediate portion (41) of said flexible hose (32) to shift along its axis on a plane perpendicular to the axis of said receiving tube (18), in a rectilinear, shifting direction (Z) intersecting the axis of the receiving tube.

2. The device of claim 1, **characterized in that** said guide means comprise a slide (42), which has said intermediate portion of the hose anchored thereto and is provided with engage means (60, 62) slidable along guides (44, 46) attachable to the reflector (12) and extending along said shifting direction.

3. The device of claim 2, **characterized in that** said guides consist of guide bars (44, 46) and said engage means consist of bushes (60, 62) which slidably engage said bars (44, 46).

4. The device of claim 2 or 3, **characterized in that** it comprises biasing means (64) arranged to bias said slide (42) away from the reflector (32) in such a way as to maintain said hose (32) tensioned in the area defined between said opposite end (36) and said guide means (40).

5. The device of claim 4, **characterized in that** said biasing means comprise elastic means (64, 264) engaged between said slide (42) and said reflector.

6. The device of any of claims 2 to 5, **characterized in that** said slide (42) comprises two counterposed plates (50, 51) between which said intermediate portion of the hose is clamped, each of said plates having two opposed walls (50', 50" e 51', 51") bent at right angles and having respective arched recesses (50'a, 50"a e 51'a, 51"a) engaging corresponding annular grooves (54, 56) of said intermediate portion (41).

7. The device of claim 6, **characterized in that** said intermediate portion of the hose (32) consists of a rigid sleeve (41) arranged with its axis aligned to said shifting direction (Z) and whose opposite ends have respective pieces (32a, 32b) of corrugated metal hose welded thereto, said annular grooves (54, 56) being formed near the opposite ends of said sleeve (41).

8. The device of claim 6, **characterized in that** said hose (132) consists of a integral piece of corrugated metal hose, the intermediate portion of which is arranged with its axis aligned to said shifting direction (Z), each of said annular grooves (154, 156) being defined between two consecutive ridges of the corrugated profile of the hose.

9. The device of any of claims 2 to 5, **characterized in that** said intermediate portion of the flexible hose (232) consists of a rigid elbow (240) whose opposite ends have respective pieces (32a, 32b) of corrugated metal hose welded thereto, said elbow (240) having one end (240a) aligned to said shifting direction (Z) and an opposite end (240b) projecting outwards, with its axis lying on the plane defined by the axis (F) of the receiving tube and said shifting direction (Z).

10. A solar collector (10) comprising a reflector (12) adapted to converge the solar beams towards a receiving tube (18) and adjustable about an axis of rotation (X) parallel to the axis (F) of said receiving tube (18), **characterized in that** it comprises a device according to claim 1, in which said flexible hose (32) has one end (34) connected to a corresponding end (24) of the receiving tube (18) and an opposite end (36) connected to a stationary pipe (26, 26a) whose axis lies on the same plane perpendicular to axis of rotation (X) on which the axis of said restrained portion (41, 141, 241), at its end (241a) connected to the stationary pipe (26, 26a), lies.

11. The solar collector (10) of claim 10, **characterized in that** said reflector (12) has an elongated shape with a parabolic transverse profile, said receiving tube (18) extends along the focus line (F) of said reflector and is anchored to said reflector (12) with its opposite ends (24) free to expand axially, said axis of rotation (X) lies on the plane of simmetry (H) of the reflector, and said shifting direction (Z) extends between the axis of rotation of the reflector and the axis of the receiving tube.

## Patentansprüche

1. Eine Vorrichtung zum Verbinden der Empfangsleitung (18) eines Solarkollektors (10), der einen Reflektor (12) hat, welcher um eine Drehachse (X) parallel zur Achse (F) der Empfangsleitung (18) verstellbar ist, mit einer stationären Leitung (26, 26a), einen biegsamen Schlauch (32) umfassend, der ein Ende (34) hat, das mit einem Ende (24) der Empfangsleitung (18) verbindbar ist, und ein gegenüberliegendes Ende (36), das mit der stationären Leitung (26, 26a) verbindbar ist, **dadurch gekennzeichnet, dass** sie Führungsmittel (40) umfasst, die ausgebildet sind, um einen intermediären Abschnitt (41) des biegsamen Schlauchs (32) zu führen, um sich entlang seiner Achse auf einer Ebene senkrecht zur Achse der Empfangsleitung (18) in einer geradlinigen Verschieberichtung (Z), die die Achse der Empfangsleitung schneidet, zu verschieben.

2. Die Vorrichtung gemäß Anspruch 1, **dadurch gekennzeichnet, dass** die Führungsmittel eine Rutsche (42) umfassen, an welcher der intermediäre Abschnitt des Schlauchs verankert ist und die mit Eingriffsmitteln (60, 62) ausgestattet ist, welche entlang Führungen (44, 46) verschiebbar sind, die am Reflektor (12) befestigt werden können und sich entlang der Verschieberichtung erstrecken.

3. Die Vorrichtung gemäß Anspruch 2, **dadurch gekennzeichnet, dass** die Führungen aus Führungsschienen (44, 46) bestehen und die Eingriffsmittel aus Buchsen (60, 62) bestehen, die verschiebbar in die Schienen (44, 46) eingreifen.

4. Die Vorrichtung gemäß Anspruch 2 oder 3, **dadurch gekennzeichnet, dass** sie Vorspannmittel (64) umfasst, angeordnet, um die Rutsche (42) vom Reflektor (32) fort so vorzuspannen, dass der Schlauch (32) in dem Bereich, der zwischen dem gegenüberliegenden Ende (36) und den Führungsmitteln (40) bestimmt ist, gespannt gehalten wird.

5. Die Vorrichtung gemäß Anspruch 4, **dadurch gekennzeichnet, dass** die Vorspannmittel elastische Mittel (64, 264) umfassen, die zwischen der Rutsche (42) und dem Reflektor gehalten werden.

6. Die Vorrichtung gemäß einem beliebigen der Ansprüche 2 bis 5, **dadurch gekennzeichnet, dass** die Rutsche (42) zwei entgegengestellte Platten (50, 51) umfasst, zwischen denen der intermediäre Abschnitt des Schlauchs eingeklemmt ist, wobei jede der Platten zwei gegenüberliegende Wände (50', 50" und 51', 51") hat, die in rechten Winkeln gebogen sind und entsprechende bogenförmige Vertiefungen (50'a, 50"a und 51'a, 51"a) haben, die in entsprechende Ringnuten (54, 56) des intermediären Abschnitts (41) eingreifen.

7. Die Vorrichtung gemäß Anspruch 6, **dadurch gekennzeichnet, dass** der intermediäre Abschnitt des Schlauchs (32) aus einer starren Hülse (41) besteht, deren Achse mit der Verschieberichtung (Z) ausgerichtet ist und mit deren gegenüberliegenden Enden entsprechende Teile (32a, 32b) von Wellblechschlauch verschweißt sind, wobei die Ringnuten (54, 56) nahe den gegenüberliegenden Enden der Hülse (41) geformt sind.

8. Die Vorrichtung gemäß Anspruch 6, **dadurch gekennzeichnet, dass** der Schlauch (132) aus einem integralen Teil Wellblechschlauch besteht, dessen intermediärer Teil so ungeordnet ist, dass seine Achse mit der Verschieberichtung (Z) ausgerichtet ist, wobei, jede der Ringnuten (154, 156) zwischen zwei aufeinander folgenden Graten des gewellten Profils des Schlauchs bestimmt ist.

9. Die Vorrichtung gemäß einem beliebigen der Ansprüche 2 bis 5, **dadurch gekennzeichnet, dass** der intermediäre Teil des biegsamen Schlauchs (232) aus einem starren Kniestück (240) besteht, mit dessen gegenüberliegenden Enden entsprechende Teile (32a, 32b) von Wellblechschlauch verschweißt sind, wobei ein Ende (240a) des Kniestücks (240) mit der Verschieberichtung (Z) ausgerichtet ist und ein gegenüberliegendes Ende (240b) nach außen ragt, wobei seine Achse auf der Ebene liegt, die von der Achse (F) der Empfangsleitung und der Verschieberichtung (Z) bestimmt wird.

10. Ein Solarkollektor (10), der einen Reflektor (12) umfasst, ausgebildet, um die Sonnenstrahlen zu einer Empfangsleitung (18) hin zu bündeln, und verstellbar um eine Drehachse (X) parallel zur Achse (F) der Empfangsleitung (18), **dadurch gekennzeichnet, dass** er eine Vorrichtung gemäß Anspruch 1 umfasst, wobei der biegsame Schlauch (32) ein Ende (34) hat, das mit einem entsprechenden Ende (24) der Empfangsleitung (18) verbunden ist, und ein gegenüberliegendes Ende (36), verbunden mit einer stationären Leitung (26, 26a), deren Achse auf derselben Ebene senkrecht zur Drehachse (X) liegt, auf der die Achse des eingezwängten Abschnitts (41, 141, 241) liegt, der an seinem Ende (241a) mit der stationären Leitung (26, 26a) verbunden ist.

11. Der Solarkollektor (10) gemäß Anspruch 10, **dadurch gekennzeichnet, dass** der Reflektor (12) eine verlängerte Form mit einem parabolischen Querprofil hat, die Empfangsleitung (18) sich entlang der Fokuslinie (F) des Reflektors erstreckt und an dem Reflektor (12) verankert ist, wobei ihre gegenüberliegenden Enden (24) frei sind, axial zu expandieren, die Drehachse (X) auf der Symmetrieebene (H) des Reflektors liegt und die Verschieberichtung (Z) sich zwischen der Drehachse des Reflektors und der Achse der Empfangsleitung erstreckt.

## Revendications

1. Dispositif pour relier le tube de réception (18) d'un collecteur solaire (10) comportant un réflecteur (12), réglable autour d'un axe de rotation (X) parallèle à l'axe (F) dudit tube de réception (18), à un tuyau fixe (26, 26a), comprenant un tuyau souple (32) comportant une extrémité (34) pouvant être reliée à une extrémité (24) du tube de réception (18) et une extrémité opposée (36) pouvant être reliée audit tuyau fixe (26, 26a), **caractérisé en ce qu'**il comprend des moyens de guidage (40) adaptés de façon à guider une partie intermédiaire (41) dudit tuyau souple (32) de façon à se déplacer le long de son axe sur un plan perpendiculaire à l'axe dudit tube de réception (18), dans une direction de déplacement rectiligne (Z) coupant l'axe du tube de réception.

2. Dispositif selon la revendication 1, **caractérisé en ce que** lesdits moyens de guidage comprennent un élément de coulissement (42), qui a ladite partie intermédiaire du tuyau souple qui est ancrée à celui-ci, et comportent des moyens de prise (60, 62) pouvant coulisser le long de guides (44, 46) pouvant être fixés au réflecteur (12) et s'étendant le long de ladite direction de déplacement.

3. Dispositif selon la revendication 2, **caractérisé en ce que** lesdits guides sont constitués par des barres de guidage (44, 46) et **en ce que** lesdits moyens de prise sont constitués par des coussinets (60, 62) qui viennent en prise de façon coulissante avec lesdites barres (44, 46).

4. Dispositif selon la revendication 2 ou 3, **caractérisé en ce qu'**il comprend des moyens de sollicitation (64) agencés de façon à solliciter ledit élément de coulissement (42) de façon à l'éloigner du réflecteur (32) de façon à maintenir ledit tuyau souple (32) tendu dans la zone définie entre ladite extrémité opposée (36) et lesdits moyens de guidage (40).

5. Dispositif selon la revendication 4, **caractérisé en ce que** lesdits moyens de sollicitation comprennent des moyens élastiques (64, 264) venant en prise entre ledit élément de coulissement (42) et ledit réflecteur.

6. Dispositif selon l'une quelconque des revendication 2 à 5, **caractérisé en ce que** ledit élément de coulissement (42) comprend deux plaques opposées (50, 51) entre lesquelles est serrée ladite partie intermédiaire du tuyau souple, chacune desdites plaques comportant deux parois opposées (50', 50" et 51', 51") incurvées à angle droit et comportant des cavités en arc respectives (50a', 50a" et 51a', 51a") venant en prise avec des rainures annulaires correspondantes (54, 56) de ladite partie intermédiaire (41).

7. Dispositif selon la revendication 6, **caractérisé en ce que** ladite partie intermédiaire du tuyau souple (32) est constituée par un manchon rigide (41) disposé avec son axe aligné avec ladite direction de déplacement (Z) et dont les extrémités opposées ont des pièces respectives (32a, 32b) de tuyau souple en métal ondulé soudées à celles-ci, lesdites rainures annulaires (54, 56) étant formées au voisinage des extrémités opposées dudit manchon (41).

8. Dispositif selon la revendication 6, **caractérisé en ce que** ledit tuyau souple (132) est constitué par une pièce d'un seul tenant de tuyau souple en métal ondulé, dont la partie intermédiaire est disposée avec son axe aligné avec ladite direction de déplacement (Z), chacune desdites rainures annulaires (154, 156) étant définie entre deux arêtes consécutives du profil ondulé du tuyau souple.

9. Dispositif selon l'une quelconque des revendications 2 à 5, **caractérisé en ce que** ladite partie intermédiaire du tuyau souple (232) est constituée par un coude rigide (240) dont les extrémités opposées ont des pièces respectives (32a, 32b) de tuyau souple en métal ondulé soudées à celles-ci, ledit coude (240) comportant une extrémité (240a) alignée avec ladite direction de déplacement (Z) et une extrémité opposée (240b) faisant saillie vers l'extérieur, avec son axe s'étendant sur le plan défini par l'axe (F) du tube de réception et ladite direction de déplacement (Z).

10. Collecteur solaire (10), comprenant un réflecteur (12) adapté de façon à faire converger les rayons solaires vers un tube de réception (18) et réglable autour d'un axe de rotation (X) parallèle à l'axe (F) dudit tube de réception (18), **caractérisé en ce qu'**il comprend un dispositif selon la revendication 1, dans lequel ledit tuyau souple (32) comporte une extrémité (34) reliée à une extrémité correspondante (24) du tube de réception (18) et une extrémité opposée (36) reliée à un tuyau fixe (26, 26a) dont l'axe s'étend sur le même plan perpendiculaire à l'axe de rotation (X) que celui sur lequel s'étend l'axe de ladite partie restreinte (41, 141, 241), à son extrémité (241a) reliée au tuyau fixe (26, 26a).

11. Collecteur solaire (10) selon la revendication 10, **caractérisé en ce que** ledit réflecteur (12) a une forme allongée avec un profil transversal parabolique, ledit tube de réception (18) s'étendant le long de la ligne de focalisation (F) dudit réflecteur et étant ancré audit réflecteur (12) avec ses extrémités opposées (24) qui sont libres de se dilater axialement, ledit axe de rotation (X) s'étendant sur le plan de symétrie (H) du réflecteur, et ladite direction de déplacement (Z) s'étendant entre l'axe de rotation du réflecteur et l'axe du tube de réception.
